# EUROPEAN PATENT APPLICATION

(11) **EP 4 691 972 A2**
(43) Date of publication of application: **11.02.2026**
(21) Application number: 25183683.9
(22) Date of filing: 18.06.2025
(51) Int. Cl.: C01B 3/38, C01B 3/50, C01B 3/58, H01M 8/0612, H01M 8/0668, H01M 8/0662

(54) **GAS PROCESSING SYSTEM, OPERATING METHOD THEREFOR, MANUFACTURING METHOD THEREFOR, AND FUEL CELL SYSTEM**

(30) Priority: 26.06.2024 JP 2024103313
(71) Applicant: Panasonic Intellectual Property Management Co., Ltd., Kadoma-shi, Osaka 571-0057 (JP)
(72) Inventor: Narita, Satoru, Kadoma-shi, Osaka, 571-0057 (JP); Iwasaki, Akira, Kadoma-shi, Osaka, 571-0057 (JP); Mori, Yoshihiro, Kadoma-shi, Osaka, 571-0057 (JP); Fujisaki, Kei, Kadoma-shi, Osaka, 571-0057 (JP)
(74) Representative: Grünecker Patent- und Rechtsanwälte PartG mbB

(57) **Abstract**

A gas processing system includes a gas processing unit and a controller. The gas processing unit includes a reformer. The gas processing unit is supplied with hydrogen gas. The gas processing unit is capable of performing at least one process for adjusting a component of the hydrogen gas. The controller sets whether to cause the gas processing unit to perform the at least one process.

## Description

### BACKGROUND OF THE INVENTION

### 1. Field of the Invention

The present disclosure relates to a gas processing system, an operating method therefor, a manufacturing method therefor, and a fuel cell system.

### 2. Description of Related Art

In the fuel cell system of WO 2011/118158, the reformer of the fuel processor reforms a raw material gas containing a hydrocarbon. This produces a hydrogen-containing gas. Subsequently, the fuel processor uses its function to adjust a component of the hydrogen-containing gas. The hydrogen-containing gas is then used for power generation by the fuel cell. Specifically, in WO 2011/118158, the above function is a selective oxidation function and the above component adjustment is a reduction of carbon monoxide.

On the other hand, in the pure hydrogen fuel cell system of JP 2019-102266 A, hydrogen gas supplied from a hydrogen storage tank is used for power generation by the fuel cell. This system requires no reformer.

### SUMMARY OF THE INVENTION

The present disclosure aims to provide a gas processing system having a hydrogen gas specification, and the gas processing system can be rationally obtained by updating a gas processing system including a reformer, and is capable of performing a process for adjusting a component of hydrogen gas as required.

The present disclosure provides a gas processing system including:
a gas processing unit including a reformer, the gas processing unit being configured to be supplied with hydrogen gas and being capable of performing at least one process for adjusting a component of the hydrogen gas; and
a controller configured to set whether to cause the gas processing unit to perform the at least one process.

The present disclosure can provide a gas processing system having a hydrogen gas specification, and the gas processing system can be rationally obtained by updating a gas processing system including a reformer, and is capable of performing a process for adjusting a component of hydrogen gas as required.

### BRIEF DESCRIPTION OF THE DRAWINGS

FIG. 1 is a circuit diagram of a system according to Embodiment 1 before the update.
FIG. 2 is a circuit diagram of a system according to Embodiment 1 after the update.
FIG. 3 is a circuit diagram of a system according to Embodiment 2 after the update.

### DETAILED DESCRIPTION OF THE INVENTION

### (Findings and the like underlying the present disclosure)

There is a trend toward transitioning from a first situation to a second situation. The first situation is a situation in which a hydrocarbon-containing gas is supplied from infrastructure. The second situation is a situation in which hydrogen gas is supplied from infrastructure. The hydrocarbon-containing gas is, for example, city gas. The hydrogen gas is, for example, pure hydrogen gas.

In the first situation, to supply hydrogen to a hydrogen utilizing device, such as a fuel cell, a gas processing system including a reformer can be installed. The reformer can produce a hydrogen-containing gas from a hydrocarbon-containing gas supplied from infrastructure. A component of the hydrogen-containing gas can be adjusted by the function of the gas processing system and the hydrogen-containing gas can then be supplied to the hydrogen utilizing device.

In transitioning from the first situation to the second situation, it is possible to remove the existing gas processing system intended for the first situation to perform a complete replacement with another gas processing system intended for the second situation. However, the above replacement requires high costs, significant labor, and a long time. The above replacement produces unnecessary waste. In addition, the above replacement requires expertise in the installation of gas processing systems. For these reasons, the above replacement is not rational.

In view of this, the present inventors have considered, instead of performing the above complete replacement, updating the existing gas processing system intended for the first situation to a gas processing system intended for the second situation by partially modifying the existing gas processing system intended for the first situation. Such an update enables the gas processing system intended for the second situation to be installed in a rational manner.

Furthermore, it is beneficial that adjustment of a component of hydrogen gas can be performed as required. This is because, when the initial quality of the hydrogen gas does not meet the required level for a hydrogen utilizing device, the quality of the hydrogen gas can be improved. Another reason is that, when the initial quality of the hydrogen gas meets the required level, omission of such an adjustment process can avoid energy consumption, enabling efficient operation of the gas processing system.

It is also possible to perform the update so that the function of adjusting a component of a gas is transferred from the gas processing system intended for the first situation to the gas processing system intended for the second situation. In this respect as well, the update can be rational.

### (Embodiment 1)

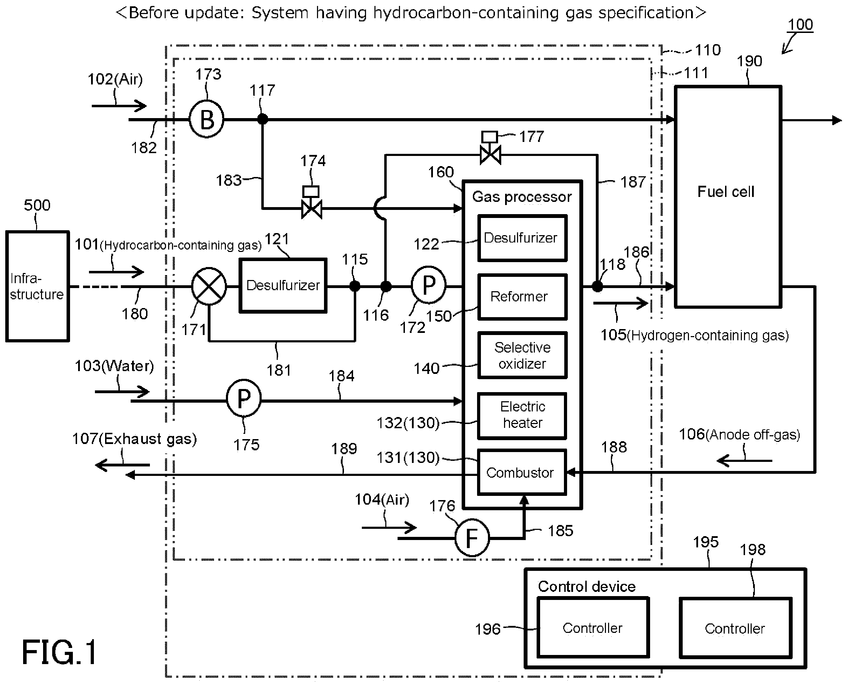

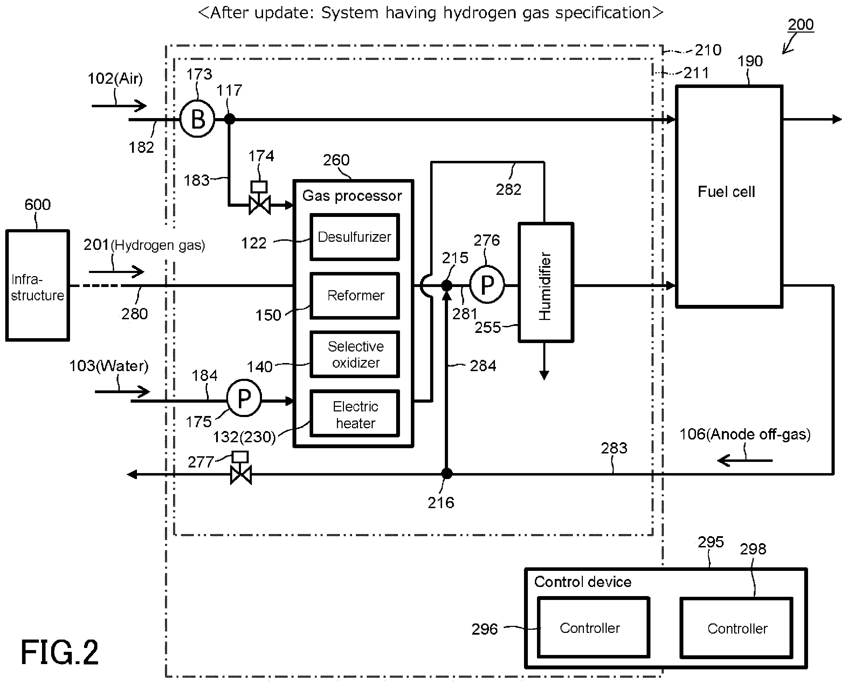

FIG. 1 is a circuit diagram of a first gas processing system 110 according to Embodiment 1. FIG. 2 is a circuit diagram of a second gas processing system 210 according to Embodiment 1. The first gas processing system 110 is a system before the update. The second gas processing system 210 is a system after the update. The update from the first gas processing system 110 to the second gas processing system 210 in Embodiment 1 is described with reference to FIGS. 1 and 2.

As shown in FIG. 1, before the update, a first fuel cell system 100 including the first gas processing system 110 and a fuel cell 190 is configured. As shown in FIG. 2, after the update, a second fuel cell system 200 including the second gas processing system 210 and the fuel cell 190 is configured.

### [First fuel cell system 100 (Before update)]

As shown in FIG. 1, the first gas processing system 110 is supplied with a hydrocarbon-containing gas 101 from an infrastructure 500. The first gas processing system 110 produces a hydrogen-containing gas 105 from the hydrocarbon-containing gas 101. The hydrogen-containing gas 105 is supplied to the fuel cell 190. The fuel cell 190 generates power using the hydrogen-containing gas 105.

The hydrocarbon-containing gas 101 is a gas containing a hydrocarbon. The hydrocarbon-containing gas 101 can include an impurity along with the hydrocarbon. The hydrocarbon may include a saturated hydrocarbon and may include an unsaturated hydrocarbon. The hydrocarbon may include a chain hydrocarbon and may include a cyclic hydrocarbon. The chain hydrocarbon may include a linear hydrocarbon and may include a branched hydrocarbon. Specifically, the hydrocarbon-containing gas 101 can contain a chain saturated hydrocarbon. The chain saturated hydrocarbon includes, for example, at least one selected from the group consisting of methane, ethane, and propane. In Embodiment 1, the hydrocarbon-containing gas 101 is city gas.

The hydrocarbon-containing gas 101 may include an impurity such as a sulfur component, carbon monoxide, or ammonia, depending on factors such as the raw materials and the production method for the hydrocarbon-containing gas 101. A sulfur component can also be introduced into the hydrocarbon-containing gas 101 through odorization. As described later, these impurities can be reduced by the first gas processing system 110.

The hydrogen-containing gas 105 is a gas containing hydrogen. The hydrogen-containing gas 105 can also be referred to as reformed gas.

The concentration of hydrocarbon in the hydrocarbon-containing gas 101 is 60 volume% or more and 100 volume% or less in one example, 70 volume% or more and 100 volume% or less in one specific example, and 80 volume% or more and 100 volume% or less in a more specific example. In these numerical examples, the concentration of hydrocarbon in the hydrocarbon-containing gas 101 refers specifically to the concentration at the inlet of the first gas processing system 110.

The concentration (on a dry basis) of hydrogen in the hydrogen-containing gas 105 is 30 volume% or more and 90 volume% or less in one example, and 50 volume% or more and 80 volume% or less in one specific example. In these numerical examples, the concentration of hydrogen in the hydrogen-containing gas 105 refers specifically to the concentration at the outlet of a reformer 150.

The first gas processing system 110 includes a gas processing unit 111 and a controller 196. The gas processing unit 111 includes a desulfurizer 121, a gas processor 160, a switch 171, a pump 172, a blower 173, a valve 174, a pump 175, a fan 176, a valve 177, a flow path 180, a flow path 181, a flow path 182, a flow path 183, a flow path 184, a flow path 185, a flow path 186, a flow path 187, a flow path 188, and a flow path 189. The gas processor 160 includes a desulfurizer 122, a heater 130, a selective oxidizer 140, and the reformer 150. The heater 130 includes a combustor 131 and an electric heater 132.

The flow path 180 connects the infrastructure 500, the switch 171, the desulfurizer 121, a point 115, a point 116, the pump 172, and the gas processor 160 in this order. The flow path 181 is connected to the flow path 180 at the switch 171 and at the point 115 so as to bypass the desulfurizer 121. The hydrocarbon-containing gas 101 supplied from the infrastructure 500 flows through the flow path 180.

The switch 171 switches the flow destination of the hydrocarbon-containing gas 101 between the desulfurizer 121 and the flow path 181. In Embodiment 1, the switch 171 is a three-way valve.

The desulfurizer 121 performs adsorptive desulfurization of the hydrocarbon-containing gas 101. Through the adsorptive desulfurization, a sulfur component contained in the hydrocarbon-containing gas 101 is reduced. The desulfurizer 121 is filled with an adsorptive desulfurization agent. In Embodiment 1, the adsorptive desulfurization agent can reduce the sulfur component at room temperature. Examples of the adsorptive desulfurization agent include activated carbon, a zeolite, and a metal compound.

The pump 172 feeds the hydrocarbon-containing gas 101 to the gas processor 160.

The flow path 182 connects the blower 173, a point 117, and the fuel cell 190 in this order. The flow path 183 is connected to the flow path 182 at the point 117. The flow path 183 connects the point 117, the valve 174, and the gas processor 160 in this order.

The blower 173 feeds air 102 to the gas processor 160 and the fuel cell 190. The valve 174 controls the flow of the air 102 to the gas processor 160. In Embodiment 1, in the gas processor 160, the air 102 is fed to the selective oxidizer 140. In Embodiment 1, the valve 174 is a flow control valve. Here, the flow control valve is a valve that can be set not only to opening degrees of 0% (fully closed) and 100% (fully open), but also to opening degrees greater than 0% and less than 100%.

The flow path 184 connects the pump 175 and the gas processor 160. The pump 175 feeds water 103 to the gas processor 160. In Embodiment 1, in the gas processor 160, the water 103 is fed to the reformer 150.

The flow path 185 connects the fan 176 and the gas processor 160. The fan 176 feeds air 104 to the gas processor 160. In Embodiment 1, in the gas processor 160, the air 104 is fed to the combustor 131.

In the gas processor 160, the desulfurizer 122, the reformer 150, and the selective oxidizer 140 are connected in this order.

As described later, a hydrogenation reaction can occur in the desulfurizer 122 according to the present embodiment. In the present embodiment, a hydrogenation reaction may occur not only by adding hydrogen to the gas, but also by using hydrogen originally contained in the gas. Furthermore, hydrodesulfurization may be based not only on a hydrogenation reaction that occurs by adding hydrogen to the gas, but also on a hydrogenation reaction that occurs by using hydrogen originally contained in the gas.

In a state where the desulfurizer 122 is heated by the heater 130, the desulfurizer 122 performs hydrodesulfurization of the hydrocarbon-containing gas 101 using hydrogen. Through the hydrodesulfurization, the sulfur component contained in the hydrocarbon-containing gas 101 is reduced. The desulfurizer 122 is filled with a hydrodesulfurization agent. The hydrodesulfurization agent induces hydrodesulfurization. By being heated by the heater 130, the desulfurizer 122 can be maintained within a temperature range of, for example, 200°C to 300°C.

Specifically, the hydrodesulfurization agent includes a hydrogen sulfide generating agent and a hydrogen sulfide adsorbent. The hydrogen sulfide generating agent converts the sulfur component in the hydrocarbon-containing gas 101 into hydrogen sulfide through a hydrogenation reaction using hydrogen. In a state where the temperature of the hydrogen sulfide adsorbent is appropriately controlled by the heater 130, the hydrogen sulfide adsorbent adsorbs hydrogen sulfide through a chemisorption reaction. Examples of the hydrogen sulfide generating agent include an agent containing CuZn and an agent containing CoMo. Examples of the hydrogen sulfide adsorbent include an agent containing CuZn and an agent containing ZnO.

Equation 1 below provides a specific example of the hydrogenation reaction. In this specific example, the sulfur component is CH₃SCH₃.

Equation 1: 2CH₃SCH₃+4H₂→4CH₄+2H₂S

Equation 2 below provides a specific example of the chemisorption reaction. In this specific example, the hydrogen sulfide adsorbent is an agent containing ZnO.

Equation 2: ZnO+H₂S→ZnS+H₂O

In Embodiment 1, the desulfurizer 122 is heated by the heater 130, whereby the hydrodesulfurization of the hydrocarbon-containing gas 101 is performed by the desulfurizer 122. Specifically, during a start-up period in which the gas processor 160 is started up, the heating of the desulfurizer 122 is performed by the electric heater 132 of the heater 130. During a period after the start-up period, the heating of the desulfurizer 122 is performed by the combustor 131 of the heater 130. In Embodiment 1, during the start-up period, the temperature of the desulfurizer 122 increases. During the above period after the start-up period, the temperature of the desulfurizer 122 is controlled to follow a constant target value. The constant target value is, for example, 200°C or more and 300°C or less.

The water 103 supplied to the gas processor 160 is heated by the combustor 131 and thereby converted into steam. In a state where the reformer 150 is heated by the combustor 131, the reformer 150 induces a reforming reaction between the steam and the hydrocarbon-containing gas 101. This produces the hydrogen-containing gas 105.

The reformer 150 is filled with a reforming catalyst. The reforming catalyst induces a reforming reaction. Examples of the reforming catalyst include a noble metal and a transition metal. Examples of noble metals include platinum (Pt), ruthenium (Ru), and rhodium (Rh). Examples of transition metals include nickel (Ni) and cobalt (Co).

Equation 3 below provides a specific example of the reforming reaction. In this specific example, the hydrocarbon in the hydrocarbon-containing gas 101 is a chain saturated hydrocarbon. In Equation 3, n and m are natural numbers.

Equation 3: CₙHₘ+nH₂O→nCO+((m/2)+n)H₂

For example, when n = 1 and m = 4, Equation 3 represents a reaction using methane. For example, when n = 2 and m = 6, Equation 3 represents a reaction using ethane. For example, when n = 3 and m = 8, Equation 3 represents a reaction using propane.

The selective oxidizer 140 performs selective oxidation of the hydrogen-containing gas 105 using the air 102. That is, the selective oxidizer 140 induces a selective oxidation reaction of the hydrogen-containing gas 105 using the air 102. Through the selective oxidation, carbon monoxide and/or ammonia contained in the hydrogen-containing gas 105 is reduced.

The selective oxidizer 140 is filled with a selective oxidation catalyst. The selective oxidation catalyst induces a selective oxidation reaction. An example of the selective oxidation catalyst is a catalyst containing ruthenium (Ru).

Equation 4 and/or Equation 5 below provides specific examples of the selective oxidation reaction.

Equation 4: 2CO+O₂→2CO₂

Equation 5: 4NH₃+3O₂→2N₂+6H₂O

The flow path 186 connects the gas processor 160, a point 118, and the fuel cell 190 in this order. The hydrogen-containing gas 105 subjected to the selective oxidation reaction is supplied to the fuel cell 190 through the flow path 186.

The flow path 187 is connected to the flow path 186 at the point 118 and connected to the flow path 180 at the point 116. The flow path 187 connects the point 118, the valve 177, and the point 116 in this order. The hydrogen-containing gas 105 flows from the point 118 through the flow path 187 to the point 116. Accordingly, the hydrocarbon-containing gas 101 flowing, at a position upstream of the gas processor 160, through the flow path 180 can include hydrogen derived from the hydrogen-containing gas 105. This hydrogen is used for the hydrodesulfurization, specifically for the hydrogenation reaction. The flow path 187 can also be referred to as a recycling flow path. In Embodiment 1, the valve 177 is a flow control valve.

In Embodiment 1, the switch 171 is set so that, during the start-up period in which the gas processor 160 is started up, the hydrocarbon-containing gas 101 flows into the desulfurizer 121. Accordingly, the hydrocarbon-containing gas 101 is desulfurized by the desulfurizer 121.

The switch 171 is set so that, during a period after the start-up period, the hydrocarbon-containing gas 101 flows through the flow path 181. During the period after the start-up period, the flow path 187 directs the hydrogen-containing gas 105 flowing through the flow path 186 to the flow path 180. Accordingly, the hydrocarbon-containing gas 101 flowing, at a position upstream of the gas processor 160, through the flow path 180 includes hydrogen derived from the hydrogen-containing gas 105. The desulfurizer 122 uses this hydrogen to perform hydrodesulfurization of the hydrocarbon-containing gas 101.

The fuel cell 190 generates power using the air 102 and the hydrogen-containing gas 105 output from the first gas processing system 110. Typically, the fuel cell 190 includes a cell stack. In Embodiment 1, the fuel cell 190 is a polymer electrolyte fuel cell (PEFC).

The flow path 188 connects the fuel cell 190 and the gas processor 160. Anode off-gas 106 from the fuel cell 190 is supplied through the flow path 188 to the gas processor 160. In the gas processor 160, the anode off-gas 106 is fed to the combustor 131.

The combustor 131 combusts the air 104 and the anode off-gas 106. This generates heat. The generated heat can be utilized to, for example, heat the desulfurizer 122, produce steam, or heat the reformer 150. In Embodiment 1, the combustor 131 is a burner.

The flow path 189 is connected to the gas processor 160. Exhaust gas 107 from the combustor 131 is discharged through the flow path 189 to the outside of the first fuel cell system 100.

The first fuel cell system 100 includes a control device 195. The control device 195 includes the controller 196 and a controller 198.

As described above, the controller 196 is included in the first gas processing system 110. The controller 196 controls the gas processing unit 111. For example, the controller 196 controls the switch 171, the pump 172, the blower 173, the valve 174, the pump 175, the fan 176, and the heater 130. Specifically, the controller 196 controls the combustor 131 and the electric heater 132.

The controller 198 controls the fuel cell 190. Specifically, the controller 198 sets the fuel cell 190 to a power generation state or a stopped state.

The controller 196 includes a processor and a memory. The controller 198 includes a processor and a memory. In Embodiment 1, a first processor serves as the processor of the controller 196 and the processor of the controller 198. A first memory serves as the memory of the controller 196 and the memory of the controller 198. The controller 196 and the controller 198 are not physically distinguished from each other, and are implemented by a first device using a first control board.

Software S_{GAS1} is installed in the controller 196. The software S_{GAS1} implements the function of controlling the gas processing unit 111. Software S_{FC1} is installed in the controller 198. The software S_{FC1} implements the function of controlling the fuel cell 190.

The memory of the controller 196 records the software S_{GAS1}. The processor of the controller 196 executes the software S_{GAS1}. The memory of the controller 198 records the software S_{FC1}. The processor of the controller 198 executes the software S_{FC1}.

The processor of the controller 196 is, for example, a CPU (central processing unit), an ASIC (application specific integrated circuit), or an FPGA (field programmable gate array). The same applies to the processor of the controller 198, the processor of a controller 296 described later, and the processor of a controller 298 described later.

The memory of the controller 196 is, for example, a semiconductor recording medium, a magnetic recording medium, a magneto-optical recording medium, or an optical recording medium. The semiconductor recording medium is, for example, an SD (secure digital) card, a USB (universal serial bus) memory, or an SSD (solid state drive). The magnetic recording medium is, for example, an HDD (hard disk drive) or a flexible disk. The magneto-optical recording medium is, for example, an MO (magneto-optical disk). The optical recording medium is, for example, a CD (compact disc) or a DVD (digital versatile disc). The same applies to the memory of the controller 198, the memory of the controller 296 described later, and the memory of the controller 298 described later.

The second fuel cell system 200 is described below. In the following, elements that are identical or similar between the first fuel cell system 100 and the second fuel cell system 200 are denoted by the same reference numerals, and descriptions thereof may be omitted.

### [Second fuel cell system 200 (After update)]

As shown in FIG. 2, the second fuel cell system 200 is supplied with hydrogen gas 201 from an infrastructure 600. The hydrogen gas 201 is supplied through the second gas processing system 210 to the fuel cell 190. The fuel cell 190 generates power using the hydrogen gas 201.

The hydrogen gas 201 is a gas containing hydrogen. The hydrogen gas 201 can include an impurity along with the hydrogen.

The hydrogen gas 201 may include an impurity such as a sulfur component, carbon monoxide, or ammonia, depending on factors such as the raw materials and the production method for the hydrogen gas 201. A sulfur component can also be introduced into the hydrogen gas 201 through odorization. As described later, these impurities can be reduced by the second gas processing system 210.

The concentration of hydrogen in the hydrogen gas 201 is 70 volume% or more and 100 volume% or less in one example, 80 volume% or more and 100 volume% or less in one specific example, and 90 volume% or more and 100 volume% or less in a more specific example. In these numerical examples, the concentration of hydrogen in the hydrogen gas 201 refers specifically to the concentration at the inlet of the second gas processing system 210.

In Embodiment 1, the hydrogen gas 201 is pure hydrogen gas. Here, the term "pure hydrogen gas" refers to a gas with a concentration of hydrogen of 90 volume% or more and 100 volume% or less. The pure hydrogen gas can include an impurity along with hydrogen. Specifically, the hydrogen gas 201 is pure hydrogen gas at the inlet of the second gas processing system 210.

As shown in FIG. 2, the second gas processing system 210 includes a gas processing unit 211 and the controller 296. The gas processing unit 211 includes a gas processor 260, a humidifier 255, the blower 173, the valve 174, the pump 175, a pump 276, a valve 277, a flow path 280, the flow path 182, the flow path 183, the flow path 184, a flow path 281, a flow path 282, a flow path 283, and a flow path 284. The gas processor 260 includes the desulfurizer 122, a heater 230, the selective oxidizer 140, and the reformer 150. The heater 230 includes the electric heater 132.

The flow path 280 connects the infrastructure 600 and the gas processor 260. The hydrogen gas 201 supplied from the infrastructure 600 flows through the flow path 280.

The blower 173 feeds the air 102 to the gas processor 260 and the fuel cell 190. The valve 174 controls the flow of the air 102 to the gas processor 260. In Embodiment 1, in the gas processor 260, the air 102 is fed to the selective oxidizer 140.

The flow path 184 connects the pump 175 and the gas processor 260. The pump 175 feeds the water 103 to the gas processor 260.

In the gas processor 260, the desulfurizer 122, the reformer 150, and the selective oxidizer 140 are connected in this order. These configurations are the same as those in the gas processing unit 111. In the update from the first gas processing system 110 to the second gas processing system 210, the reformer 150 is not removed but is retained. This is advantageous in terms of the efficiency of the update work.

Unlike the gas processing unit 111, the gas processing unit 211 does not reform a hydrocarbon-containing gas by the reformer 150. However, carbon can be deposited on the reforming catalyst of the reformer 150 of the gas processing unit 211. This carbon can be carbon precipitated as a result of the use of the reformer 150 in reforming the hydrocarbon-containing gas 101 in the gas processing unit 111 before the update. That is, this carbon can be evidence of an actual use of the first gas processing system 110 in reforming the hydrocarbon-containing gas 101 and an update from the first gas processing system 110 to the second gas processing system 210 after the reforming.

In a state where the desulfurizer 122 is heated by the heater 230, the desulfurizer 122 performs hydrodesulfurization of the hydrogen gas 201 using hydrogen. Through the hydrodesulfurization, a sulfur component contained in the hydrogen gas 201 is reduced. The desulfurizer 122 is filled with a hydrodesulfurization agent. By being heated by the heater 230, the desulfurizer 122 can be maintained within a temperature range of, for example, 200°C to 300°C.

Specifically, the hydrodesulfurization agent includes a hydrogen sulfide generating agent and a hydrogen sulfide adsorbent. The hydrogen sulfide generating agent converts the sulfur component in the hydrogen gas 201 into hydrogen sulfide through a hydrogenation reaction using hydrogen. In a state where the temperature of the hydrogen sulfide adsorbent is appropriately controlled by the heater 230, the hydrogen sulfide adsorbent adsorbs hydrogen sulfide through a chemisorption reaction. The description of the hydrodesulfurization agent, hydrogen sulfide generating agent, hydrogenation reaction, hydrogen sulfide adsorbent, and chemisorption reaction in the first gas processing system 110 can be applied to the second gas processing system 210.

In Embodiment 1, specifically, the desulfurizer 122 is heated by the electric heater 132, whereby the hydrodesulfurization of the hydrogen gas 201 is performed by the desulfurizer 122.

In the desulfurizer 122 of the gas processing unit 211, the hydrogen in the hydrogen gas 201 is used for the hydrodesulfurization, specifically for the hydrogenation reaction. Accordingly, in the gas processing unit 211, the flow path 187 of the gas processing unit 111 can be omitted.

The selective oxidizer 140 performs selective oxidation of the hydrogen gas 201 using the air 102. That is, the selective oxidizer 140 induces a selective oxidation reaction of the hydrogen gas 201 using the air 102. Through the selective oxidation, carbon monoxide and/or ammonia contained in the hydrogen gas 201 is reduced. The selective oxidizer 140 is filled with a selective oxidation catalyst. The description of the selective oxidation catalyst and the selective oxidation reaction in the first gas processing system 110 can be applied to the second gas processing system 210.

The flow path 281 connects the gas processor 260, a point 215, the pump 276, the humidifier 255, and the fuel cell 190 in this order. The hydrogen gas 201 subjected to the hydrodesulfurization and the selective oxidation by the gas processor 260 is output to the flow path 281. The pump 276 feeds the hydrogen gas 201 to the humidifier 255 and the fuel cell 190.

The flow path 282 connects the gas processor 260 and the humidifier 255. The water 103 that has passed through the flow path 184 and the gas processor 260 is output to the flow path 282.

The humidifier 255 humidifies the hydrogen gas 201 using the water 103. Specifically, the water 103 is heated by the heater 230 while the water 103 is being pumped by the pump 175, whereby the water 103 is converted into steam and is then supplied to the humidifier 255. In the humidifier 255, the hydrogen gas 201 is humidified with the steam. The humidification can contribute to efficient and stable power generation by the fuel cell 190. In Embodiment 1, the heating by the heater 230 is specifically heating by the electric heater 132.

Thus, in Embodiment 1, the pump 175, which is used in the gas processing unit 111 for the reforming reaction of the hydrocarbon-containing gas 101, is used in the gas processing unit 211 not for the reforming reaction of the hydrocarbon-containing gas 101 but for the humidification of the hydrogen gas 201. The electric heater 132, which is used in the gas processing unit 111 for the heating of the desulfurizer 122, is used in the gas processing unit 211 for the humidification of the hydrogen gas 201 in addition to the heating of the desulfurizer 122.

The fuel cell 190 generates power using the air 102 and the hydrogen gas 201. Thus, the fuel cell 190 generates power using the hydrogen gas 201 output from the second gas processing system 210.

The flow path 283 connects the fuel cell 190, a point 216, and the valve 277 in this order. In Embodiment 1, the valve 277 is an on-off valve. Here, the term "on-off valve" refers to a valve whose opening degree is set to either of two binary values: 0% or 100%.

By opening the valve 277, the anode off-gas 106 from the fuel cell 190 can be discharged to the outside of the second fuel cell system 200. This discharge can be referred to as purging. The valve 277 can be referred to as a purge valve.

The flow path 284 is connected to the flow path 283 at the point 216 and connected to the flow path 281 at the point 215. The anode off-gas 106 flows from the point 216 through the flow path 284 to the point 215. Accordingly, the hydrogen in the anode off-gas 106 can be utilized for power generation by the fuel cell 190.

The second fuel cell system 200 includes a control device 295. The control device 295 includes the controller 296 and the controller 298.

As described above, the controller 296 is included in the second gas processing system 210. The controller 296 controls the gas processing unit 211. For example, the controller 296 controls the blower 173, the valve 174, the pump 175, the pump 276, the valve 277, and the heater 230. Specifically, the controller 296 controls the electric heater 132.

The controller 298 controls the fuel cell 190. Specifically, the controller 298 sets the fuel cell 190 to the power generation state or the stopped state.

In the control device 295, the controller 296 and the controller 298 can operate in cooperation with each other. For example, the controller 296 monitors a supply gas supplied to the gas processing unit 211. In a proper situation, the supply gas is the hydrogen gas 201. In the case where, for example, an erroneous connection occurs such as connection of the second gas processing system 210 to an improper gas supply source, the supply gas can be a gas different from the hydrogen gas 201. For example, in the case where the second gas processing system 210 is connected to not the infrastructure 600 but the infrastructure 500, the supply gas is the hydrocarbon-containing gas 101. The controller 298 permits or prohibits power generation by the fuel cell 190, in accordance with the above monitoring result.

The control device 295 also performs notification in accordance with this monitoring result. Specifically, the control device 295 performs the notification in cooperation with a notification device not shown in the figures. The notification can be output of sound and/or output of visible information. The notification device can include a speaker and/or a display. The notification can be specifically performed by the controller 296 and/or the controller 298. These descriptions of the notification can also apply to the following configuration examples.

The second fuel cell system 200 is a system having not a hydrocarbon-containing gas specification but a hydrogen gas specification. In one configuration example of Embodiment 1, the second fuel cell system 200 is configured, in a first case, to permit the fuel cell 190 to generate power. The second fuel cell system 200 is also configured, in a second case, to prohibit the fuel cell 190 from generating power and/or to notify of an abnormality. The concentration of hydrogen in the supply gas supplied to the gas processing unit 211 is higher in the first case than in the second case, and the concentration of hydrocarbon in the supply gas is lower in the first case than in the second case. The above permission, prohibition, and notification are performed by the control device 295. Here, the concentration of hydrogen and the concentration of hydrocarbon are expressed in units of volume percent (%). In the above context, the concentrations of hydrogen and hydrocarbon in the supply gas refer specifically to the concentrations at the inlet of the second gas processing system 210.

The expression "in a first case, to permit the fuel cell 190 to generate power" is described. This expression encompasses not only an embodiment in which power generation by the fuel cell 190 is permitted throughout an entire period of the first case but also an embodiment in which power generation by the fuel cell 190 is permitted during only part of the period of the first case. For example, this expression encompasses an embodiment in which, during a period of the first case, the control device 295 or the like detects that the condition corresponds to the first case, and this detection serves as a trigger to permit the fuel cell 190 to generate power, whereby the fuel cell 190 is switched from the stopped state to the power generation state.

The expression "in a second case, to prohibit the fuel cell 190 from generating power" is described. This expression encompasses not only an embodiment in which power generation by the fuel cell 190 is prohibited throughout an entire period of the second case but also an embodiment in which power generation by the fuel cell 190 is prohibited during only part of the period of the second case. For example, this expression encompasses an embodiment in which, during a period of the second case, the control device 295 or the like detects that the condition corresponds to the second case, and this detection serves as a trigger to prohibit the fuel cell 190 from generating power, whereby the fuel cell 190 is switched from the power generation state to the stopped state.

For example, in the first case, the concentration of hydrogen in the supply gas is 70 volume% or more and 100 volume% or less, whereas the concentration of hydrocarbon in the supply gas is 0 volume% or more and less than 30 volume%. Specifically, in the first case, the concentration of hydrogen in the supply gas is 80 volume% or more and 100 volume% or less, whereas the concentration of hydrocarbon in the supply gas is 0 volume% or more and less than 20 volume%. More specifically, in the first case, the concentration of hydrogen in the supply gas is 90 volume% or more and 100 volume% or less, whereas the concentration of hydrocarbon in the supply gas is 0 volume% or more and less than 10 volume%.

For example, in the second case, the concentration of hydrogen in the supply gas is 0 volume% or more and less than 40 volume%, whereas the concentration of hydrocarbon in the supply gas is 60 volume% or more and 100 volume% or less. Specifically, in the second case, the concentration of hydrogen in the supply gas is 0 volume% or more and less than 30 volume%, whereas the concentration of hydrocarbon in the supply gas is 70 volume% or more and 100 volume% or less. More specifically, in the second case, the concentration of hydrogen in the supply gas is 0 volume% or more and less than 20 volume%, whereas the concentration of hydrocarbon in the supply gas is 80 volume% or more and 100 volume% or less.

The control device 295 can be configured to determine whether the condition corresponds to the first case or the second case. Examples of this configuration are described later.

The controller 296 includes a processor and a memory. The controller 298 includes a processor and a memory. In Embodiment 1, a second processor serves as the processor of the controller 296 and the processor of the controller 298. A second memory serves as the memory of the controller 296 and the memory of the controller 298. The controller 296 and the controller 298 are not physically distinguished from each other, and are implemented by the second device using a second control board.

Software S_{GAS2} is installed in the controller 296. The software S_{GAS2} implements the function of controlling the gas processing unit 211. Software S_{FC2} is installed in the controller 298. The software S_{FC2} implements the function of controlling the fuel cell 190.

The memory of the controller 296 records the software S_{GAS2}. The processor of the controller 296 executes the software S_{GAS2}. The memory of the controller 298 records the software S_{FC2}. The processor of the controller 298 executes the software S_{FC2}.

The update from the first gas processing system 110 to the second gas processing system 210 includes a hardware update and a software update.

In Embodiment 1, the hardware update includes removal of the desulfurizer 121, removal of the switch 171, removal of the pump 172, removal of the fan 176, removal of the combustor 131, addition of the pump 276, and addition of the humidifier 255.

In Embodiment 1, the software update includes an update from the software S_{GAS1} to the software S_{GAS2}. The software update also includes an update from the software S_{FC1} to the software S_{FC2}.

The update from the software S_{GAS1} to the software S_{GAS2} can be performed by transmitting the software S_{GAS2} to a device constituting the controller 296. The update from the software S_{FC1} to the software S_{FC2} can be performed by transmitting the software S_{FC2} to a device constituting the controller 298. In Embodiment 1, these transmissions are performed on-site where the second gas processing system 120 is to be installed.

In Embodiment 1, a device constituting the controller 196 in the first gas processing system 110 is physically reused as the device constituting the controller 296 in the second gas processing system 210. By transmitting the software S_{GAS2} to the device, the update from the software S_{GAS1} to the software S_{GAS2} is performed in the device. In Embodiment 1, this transmission is performed on-site where the second gas processing system 120 is to be installed.

In Embodiment 1, a device constituting the controller 198 in the first gas processing system 110 is physically reused as the device constituting the controller 298 in the second gas processing system 210. By transmitting the software S_{FC2} to the device, the update from the software S_{FC1} to the software S_{FC2} is performed in the device. In Embodiment 1, this transmission is performed on-site where the second gas processing system 120 is to be installed.

Specifically, in Embodiment 1, the first device is physically reused as the second device. The first control board is reused as the second control board. The first processor is reused as the second processor. The first memory is reused as the second memory.

In one specific example, the device constituting the controller 196 in the first gas processing system 110 is physically reused as the device constituting the controller 296 in the second gas processing system 210. Specifically, the processor and the memory of the controller 196 in the first gas processing system 110 are physically reused as the processor and the memory of the controller 296 in the second gas processing system 210. When the processor belongs to the controller 196 of the first gas processing system 110, the processor counts the cumulative usage time of the reformer 150 in reforming the hydrocarbon-containing gas 101. When the memory belongs to the controller 196 of the first gas processing system 110, the memory records this cumulative time. The cumulative time recorded in the memory is greater than zero. After this recording is performed, the update is performed. The information on the cumulative time in the memory is transferred after the update. Consequently, even when the memory belongs to the controller 296 of the second gas processing system 210, the memory still records the information indicating that the cumulative usage time of the reformer 150 in reforming the hydrocarbon-containing gas 101 is greater than zero. This can be evidence of an actual use of the first gas processing system 110 in reforming the hydrocarbon-containing gas 101 and an update from the first gas processing system 110 to the second gas processing system 210 after the reforming.

According to Embodiment 1, the second gas processing system 210 having a hydrogen gas specification, which can be rationally obtained by updating the first gas processing system 110 having a hydrocarbon-containing gas specification in which the reformer 150 is included, can be provided. In particular, in Embodiment 1, the reformer 150 is present both in the gas processing unit 111 and in the gas processing unit 211. This can contribute to the rationalization of the update. These aspects also apply to Embodiment 2.

Other embodiments are described below. In the following, elements that are identical or similar between the previously described embodiments and subsequently described embodiments are denoted by the same reference numerals, and descriptions thereof may be omitted. The description of the embodiments can be applied to each other unless technically inconsistent. The embodiments may be combined with each other unless technically inconsistent.

### (Embodiment 2)

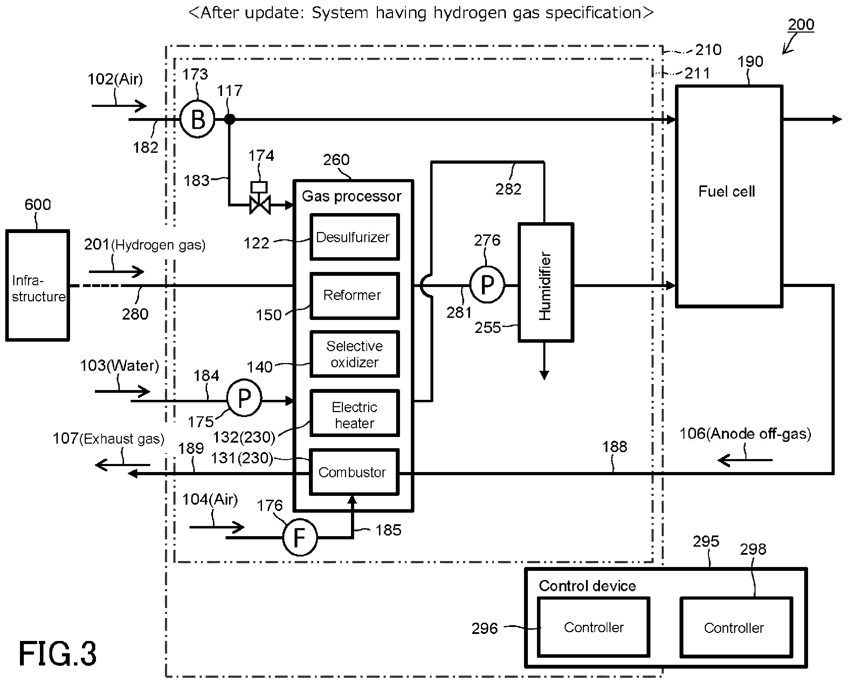

FIG. 3 is a circuit diagram of the second gas processing system 210 according to Embodiment 2. The second gas processing system 210 is a system after the update. The update from the first gas processing system 110 to the second gas processing system 210 in Embodiment 2 is described with reference to FIGS. 1 and 3.

### [Second fuel cell system 200 (After update)]

As shown in FIG. 3, in the gas processing unit 211 of the second gas processing system 210, the heater 230 includes the combustor 131 and the electric heater 132.

The flow path 185 connects the fan 176 and the gas processor 260. The fan 176 feeds the air 104 to the gas processor 260. In Embodiment 2, in the gas processor 260, the air 104 is fed to the combustor 131.

In Embodiment 2, the desulfurizer 122 is heated by the heater 230, whereby the hydrodesulfurization of the hydrogen gas 201 is performed by the desulfurizer 122. Specifically, during a start-up period in which the gas processor 260 is started up, the heating of the desulfurizer 122 is performed by the electric heater 132 of the heater 230. During a period after the start-up period, the heating of the desulfurizer 122 is performed by the combustor 131 of the heater 230. In Embodiment 2, during the start-up period, the temperature of the desulfurizer 122 increases. During the above period after the start-up period, the temperature of the desulfurizer 122 is controlled to follow a constant target value. The constant target value is, for example, 200°C or more and 300°C or less.

The flow path 188 connects the fuel cell 190 and the gas processor 260. The anode off-gas 106 from the fuel cell 190 is supplied through the flow path 188 to the gas processor 260. In the gas processor 260, the anode off-gas 106 is fed to the combustor 131.

The combustor 131 combusts the air 104 and the anode off-gas 106. This generates heat. The generated heat can be utilized to, for example, heat the desulfurizer 122 or heat the water 103 used for humidifying the hydrogen gas 201.

The flow path 189 is connected to the gas processor 260. The exhaust gas 107 from the combustor 131 is discharged through the flow path 189 to the outside of the second fuel cell system 200.

The humidifier 255 humidifies the hydrogen gas 201 using the water 103. Specifically, the water 103 is heated by the heater 230 while the water 103 is being pumped by the pump 175, whereby the water 103 is converted into steam and is then supplied to the humidifier 255. In the humidifier 255, the hydrogen gas 201 is humidified with the steam.

In Embodiment 2, specifically, during the start-up period in which the gas processor 260 is started up, the heating of the desulfurizer 122 can be performed by the electric heater 132 of the heater 230. In a period after the start-up period, the heating of the water 103 can be performed by the combustor 131 and/or the electric heater 132 of the heater 230.

Thus, in Embodiment 2, the pump 175, which is used in the gas processing unit 111 for the reforming reaction of the hydrocarbon-containing gas 101, is used in the gas processing unit 211 not for the reforming reaction of the hydrocarbon-containing gas 101 but for the humidification of the hydrogen gas 201. The electric heater 132, which is used in the gas processing unit 111 for the heating of the desulfurizer 122, is used in the gas processing unit 211 for the humidification of the hydrogen gas 201 in addition to the heating of the desulfurizer 122. The combustor 131, which is used in the gas processing unit 111 for the reforming reaction of the hydrocarbon-containing gas 101 and the heating of the desulfurizer 122, is used in the gas processing unit 211 not for the reforming reaction of the hydrocarbon-containing gas 101 but for the heating of the desulfurizer 122 and the humidification of the hydrogen gas 201.

The controller 296 controls the gas processing unit 211. For example, the controller 296 controls the blower 173, the valve 174, the pump 175, the fan 176, the pump 276, and the heater 230. Specifically, the controller 296 controls the combustor 131 and the electric heater 132.

In Embodiment 2, the hardware update includes removal of the desulfurizer 121, removal of the switch 171, removal of the pump 172, addition of the pump 276, and addition of the humidifier 255.

### (Processes of Embodiments 1 and 2, set-up operations of controller 296, update, and the like)

As understood from the above description, in Embodiments 1 and 2, the gas processing unit 211 is supplied with the hydrogen gas 201. The gas processing unit 211 is capable of performing at least one process for adjusting a component of the hydrogen gas 201. Specifically, the at least one process can include at least one selected from the group consisting of:
(a) a process of desulfurizing the hydrogen gas 201;
(b) a process of selectively oxidizing the hydrogen gas 201; and
(c) a process of humidifying the hydrogen gas 201.

In this context, "adjusting a component of the hydrogen gas 201" expresses a concept that encompasses reducing the sulfur component, reducing the carbon monoxide, reducing the ammonia, and increasing the moisture in the hydrogen gas 201. The process (a) can specifically be a process of desulfurizing an impurity in the hydrogen gas 201. The desulfurization (a) can specifically be hydrodesulfurization. The process (b) can specifically be a process of selectively oxidizing an impurity in the hydrogen gas 201.

Some hydrogen utilizing devices such as fuel cells can be adversely affected by an impurity supplied thereto. In this regard, according to Embodiments 1 and 2, adjusting a component of the hydrogen gas 201 enables a reduction of an impurity in the hydrogen gas 201. Consequently, it is less likely that a hydrogen utilizing device supplied with the hydrogen gas 201 from the gas processing unit 211 is adversely affected by an impurity. For example, when the hydrogen utilizing device is the fuel cell 190, this benefit can be enjoyed.

Specifically, a low content of the sulfur component in the hydrogen gas 201, a low content of the carbon monoxide in the hydrogen gas 201, and a low content of the ammonia in the hydrogen gas 201 can be beneficial for the hydrogen gas 201 to be supplied to the fuel cell 190. This is because irreversible degradation and temporary performance deterioration of the fuel cell 190 can be easily avoided.

Furthermore, an appropriate moisture content in the hydrogen gas 201 can also be beneficial for the hydrogen gas 201 to be supplied to the fuel cell 190. This is because efficient and stable power generation by the fuel cell 190 can be achieved.

In Embodiments 1 and 2, the controller 296 sets whether to cause the gas processing unit 211 to perform the above at least one process. In Embodiments 1 and 2, in accordance with the above setting, it is determined whether the at least one process for adjusting a component of the hydrogen gas 201 is to be performed by the gas processing unit 211. According to this configuration, the process for adjusting the component of the hydrogen gas 201 can be performed as required. Accordingly, when the initial quality of the hydrogen gas 201 does not meet the required level for the fuel cell 190, the quality of the hydrogen gas 201 can be improved. Furthermore, when the initial quality of the hydrogen gas 201 meets the required level, omission of the process can avoid energy consumption, enabling efficient operation of the second gas processing system 210. As understood from these descriptions, the controller 296 functions as a setting device.

In Embodiments 1 and 2, the gas processing unit 211 includes the desulfurizer 122 and the heater 230. The desulfurizer 122 performs hydrodesulfurization of the hydrogen gas 201. The heater 230 heats the desulfurizer 122. The at least one process includes a process of heating the desulfurizer 122 by the heater 230, and this process is such that the hydrodesulfurization is performed. The controller 296 sets whether to cause the heater 230 to perform a heat-generating operation, and this operation is such that the desulfurizer 122 is heated by the heater 230 and the hydrodesulfurization is thereby performed.

In Embodiment 1, the heater 230 includes the electric heater 132. The electric heater 132 heats the desulfurizer 122. The at least one process includes a process of heating the desulfurizer 122 by the electric heater 132, and this process is such that the hydrodesulfurization is performed. The controller 296 sets whether to cause the electric heater 132 to perform a heat-generating operation, and this operation is such that the desulfurizer 122 is heated by the electric heater 132 and the hydrodesulfurization is thereby performed.

In Embodiment 2, the heater 230 includes the combustor 131. The combustor 131 heats the desulfurizer 122. The gas processing unit 211 includes a first air supply device. The first air supply device supplies the air 104 to the combustor 131. The at least one process includes a process of supplying the air 104 to the combustor 131 by the first air supply device, and this process is such that the desulfurizer 122 is heated by the combustor 131 and the hydrodesulfurization is thereby performed. The controller 296 sets whether to cause the first air supply device to perform an operation of feeding the air 104 to the combustor 131, and this operation is such that the desulfurizer 122 is heated by the combustor 131 and the hydrodesulfurization is thereby performed. The first air supply device is specifically the fan 176.

In Embodiments 1 and 2, the gas processing unit 211 includes the selective oxidizer 140 and a second air supply device. The selective oxidizer 140 performs selective oxidation of the hydrogen gas 201. The second air supply device supplies the air 102 to the selective oxidizer 140. The at least one process includes a process of supplying the air 102 to the selective oxidizer 140 by the second air supply device, and this process is such that the selective oxidation is performed by the selective oxidizer 140. The controller 296 sets whether to cause the second air supply device to perform an operation of feeding the air 102 to the selective oxidizer 140, and this operation is such that the selective oxidation is performed by the selective oxidizer 140. The second air supply device specifically includes the blower 173, and more specifically includes the blower 173 and the valve 174.

In Embodiments 1 and 2, the gas processing unit 211 includes a water supply device and the humidifier 255. The water supply device supplies the water 103 to the humidifier 255, and this water 103 is to be used for humidification of the hydrogen gas 201. The at least one process includes a process of supplying the water 103 to the humidifier 255 by the water supply device, and this process is such that the humidification is performed by the humidifier 255. The controller 296 sets whether to cause the water supply device to perform an operation of supplying the water 103 to the humidifier 255, and this operation is such that the humidification is performed by the humidifier 255. The water supply device is specifically the pump 175. The supply of the water 103 is specifically pumping of the water 103.

In Embodiments 1 and 2, the gas processing unit 211 includes the heater 230. The heater 230 heats the water 103 while the water 103 is being supplied to the humidifier 255 by the water supply device. The at least one process includes a process of heating, by the heater 230, the water 103 while the water 103 is being supplied to the humidifier 255 by the water supply device, and this process is such that the humidification is performed by the humidifier 255. The controller 296 sets whether to cause the heater 230 to perform a heat-generating operation, and this operation is such that the water 103 is heated by the heater 230 while the water 103 is being supplied to the humidifier 255 by the water supply device, and the humidification is thereby performed by the humidifier 255. The heater 230 can include the combustor 131 and/or the electric heater 132.

In a manufacturing method for the second gas processing system 210 according to Embodiments 1 and 2, the second gas processing system 210 is manufactured by modifying the first gas processing system 110 into the second gas processing system 210. The first gas processing system 110 includes the gas processing unit 111. The gas processing unit 111 is supplied with the hydrocarbon-containing gas 101. The gas processing unit 111 includes the reformer 150. The reformer 150 produces the hydrogen-containing gas 105 from the hydrocarbon-containing gas 101. The second gas processing system 210 includes the gas processing unit 211 and the controller 296. The gas processing unit 211 is supplied with the hydrogen gas 201. The gas processing unit 211 includes the reformer 150. The gas processing unit 211 is capable of performing the at least one process for adjusting a component of the hydrogen gas 201 using at least one device transferred from the gas processing unit 111 to the gas processing unit 211. The controller 296 sets whether to cause the gas processing unit 211 to perform the at least one process. The manufacturing method includes a step of installing the software S_{GAS2} that enables this setting in the gas processing unit 211. Specifically, this installation step includes a step of receiving, by the device constituting the controller 296, the software S_{GAS2}. According to this configuration, it is possible to set whether to perform the at least one process for adjusting a component of the hydrogen gas 201 by exercising at least one function transferred from the gas processing unit 111 to the gas processing unit 211.

As described above, in one embodiment of the update, the device constituting the controller 196 in the first gas processing system 110 is physically reused as the device constituting the controller 296 in the second gas processing system 210. The update from the software S_{GAS1} to the software S_{GAS2} can be performed by transmitting the software S_{GAS2} to the device. Constructing the second gas processing system 210 through such an update can be regarded as a "manufacturing method for the second gas processing system 210".

As described later, in one embodiment of the update, the device constituting the controller 196 and the device constituting the controller 296 are physically different from each other. The device constituting the controller 196 is physically replaced with the device constituting the controller 296. Constructing the second gas processing system 210 through such an update can be regarded as a "manufacturing method for the second gas processing system 210".

The at least one device transferred from the gas processing unit 111 to the gas processing unit 211 can include the desulfurizer 122. In this case, the at least one process can include the process of desulfurizing the hydrogen gas 201. Specifically, the at least one device can include the desulfurizer 122 and the heater 230. The heater 230 can include the combustor 131 and/or the electric heater 132. When the at least one device includes the combustor 131, the at least one device can include the first air supply device. Specifically, the desulfurization can be hydrodesulfurization. The first air supply device can specifically be the fan 176.

The at least one device transferred from the gas processing unit 111 to the gas processing unit 211 can include the selective oxidizer 140. In this case, the at least one process can include the process of selectively oxidizing the hydrogen gas 201. Specifically, the at least one device can include the selective oxidizer 140 and the second air supply device. The second air supply device can include the blower 173. The second air supply device can specifically include the blower 173 and the valve 174.

The at least one device transferred from the gas processing unit 111 to the gas processing unit 211 can include a water supply device. In this case, the at least one process can include the process of humidifying the hydrogen gas 201. Specifically, the at least one device can include the water supply device and the heater 230. The water supply device can specifically be the pump 175. The heater 230 can include the combustor 131 and/or the electric heater 132. When the at least one device includes the combustor 131, the at least one device can include the first air supply device. The first air supply device can specifically be the fan 176.

### (Techniques applicable to examples in FIGS. 1 to 3 and to Embodiments 1 and 2)

The switch 171 may be configured using a plurality of on-off valves or may be configured using a plurality of flow control valves. The valve 174, the valve 177, and the valve 277 may be flow control valves or may be on-off valves.

The combustor 131 may combust a hydrocarbon-containing gas that is supplied separately from the anode off-gas 106. This hydrocarbon-containing gas may be the hydrocarbon-containing gas 101.

A configuration may be employed in which the heater 230 includes the combustor 131 and does not include the electric heater 132.

The second fuel cell system 200 can also be configured to humidify the hydrogen gas 201 without using the water 103 and the pump 175. In one example, moisture exchange is performed between the hydrogen gas 201 and the cooling water for the fuel cell through a humidifying membrane not shown in the figures. This humidifies the hydrogen gas 201.

A single air supply device may serve as both the first air supply device and the second air supply device.

In Embodiment 1 and Embodiment 2 described above, the second fuel cell system 200 is a system having not a hydrocarbon-containing gas specification but a hydrogen gas specification. In one configuration example of Embodiment 1 and Embodiment 2, the second fuel cell system 200 is configured, in the first case, to permit the fuel cell 190 to generate power. The second fuel cell system 200 is also configured, in the second case, to prohibit the fuel cell 190 from generating power and/or to notify of an abnormality. As described above, the control device 295 can be configured to determine whether the condition corresponds to the first case or the second case. Examples of this configuration (a first configuration example and a second configuration example) are described below.

### (First configuration example)

In the first configuration example, the reforming function possessed by the gas processing unit 111 is retained in the gas processing unit 211. During normal operation, the control device 295 causes the fuel cell 190 to generate power using one or more operating parameters according to the assumption of the first case. The amount of power generated by the fuel cell 190 depends on the amount of hydrogen supplied to the fuel cell 190.

For example, assume a case where the supply gas supplied to the gas processing unit 211 is a pure chain saturated hydrocarbon and a reforming reaction proceeds in accordance with Equation 3. In this case, the reforming reaction produces hydrogen in an amount that is approximately ((m/2)+n) times the amount of the chain saturated hydrocarbon serving as the supply gas, and the hydrogen is supplied to the fuel cell 190. For example, when the supply gas is methane, hydrogen in an amount that is approximately three times the amount of the methane is supplied to the fuel cell 190. On the other hand, assume a case where the supply gas supplied to the gas processing unit 211 is pure hydrogen. In this case, hydrogen in an amount that is substantially the same as the amount of the supply gas is supplied to the fuel cell 190. Accordingly, under the condition that the amount of hydrogen supplied to the fuel cell 190 and the amount of power generated by the fuel cell 190 are the same, a greater amount of supply gas is required when the supply gas is pure hydrogen than when the supply gas is a pure chain saturated hydrocarbon.

The above discussion is generalized as follows: under the condition that the amount of hydrogen supplied to the fuel cell 190 and the amount of power generated by the fuel cell 190 are the same, a greater amount of supply gas is required when the supply gas is the hydrogen gas 201 than when the supply gas is the hydrocarbon-containing gas 101. More generally, under the above condition, a greater amount of supply gas is required when the supply gas is a gas assumed to be supplied in the first case than when the supply gas is a gas assumed to be supplied in the second case.

In view of the above, in the first configuration example, the control device 295 can perform the following test operation. That is, during the test operation, the control device 295 issues a command to the fuel cell 190 to generate power using one or more operating parameters according to the assumption of not the first case but the second case, and at the same time monitors the power generation state of the fuel cell 190.

Assume a case where, despite the adoption of one or more operating parameters according to the assumption of the second case, a supply gas assumed to be supplied in the first case is supplied to the gas processing unit 211. In this case, the fuel cell 190 can experience a shortage of supplied hydrogen, resulting in a phenomenon caused by the shortage of hydrogen, such as failure in power generation or inability to generate power. When such a phenomenon occurs, the control device 295 determines that the correct supply gas, namely, a supply gas assumed to be supplied in the first case (e.g., the hydrogen gas 201), is supplied.

On the other hand, assume a case where one or more operating parameters according to the assumption of the second case are adopted, and a supply gas assumed to be supplied in the second case is supplied to the gas processing unit 211. In this case, the fuel cell 190 can be supplied with hydrogen without excess or deficiency and perform normal power generation. When this phenomenon occurs, the control device 295 determines that an incorrect supply gas, namely, a supply gas assumed to be supplied in the second case (e.g., the hydrocarbon-containing gas 101), is supplied.

### (Second configuration example)

Furthermore, (e1) the relationship between a command value and an actual value of the gas flow rate in the pump 276 can vary between a case where the supply gas is a gas assumed to be supplied in the first case and a case where the supply gas is a gas assumed to be supplied in the second case, due to a difference in the type of supply gas, a difference in the amount of gas supplied to the pump 276, and the like. Moreover, the following can vary between the former case and the latter case: for example, (e2) a detection value of a temperature sensor not shown in the figures, (e3) a detection value of a pressure sensor not shown in the figures, (e4) a detection value of a flow rate sensor not shown in the figures, and the like. The sensors for (e2) to (e4) are, for example, provided in the flow path 281. The control device 295 may be configured to determine whether the condition corresponds to the first case or the second case, on the basis of at least one selected from the group consisting of (e1) to (e4).

The determination for the first configuration example and the determination for the second configuration example may be combined. For example, the control device 295 may be configured to determine whether the condition corresponds to the first case or the second case, on the basis of the degree of failure in power generation by the fuel cell 190 and at least one selected from the group consisting of (e1) to (e4).

The processor of the controller 196 and the processor of the controller 198 may be separate from each other. The memory of the controller 196 and the memory of the controller 198 may be separate from each other. The control board of the controller 196 and the control board of the controller 198 may be separate from each other. The device constituting the controller 196 and the device constituting the controller 198 may be separate from each other.

The processor of the controller 296 and the processor of the controller 298 may be separate from each other. The memory of the controller 296 and the memory of the controller 298 may be separate from each other. The control board of the controller 296 and the control board of the controller 298 may be separate from each other. The device constituting the controller 296 and the device constituting the controller 298 may be separate from each other.

The device constituting the controller 196 and the device constituting the controller 296 may be physically different from each other. Even in this case, the transmission of the software S_{GAS2} to the device constituting the controller 296 brings the controller 296 into a state in which the controller 296 is capable of executing the software S_{GAS2}. The device constituting the controller 196 is then physically replaced with the device constituting the controller 296. Such an update can also be performed. In this case, the transmission of the software S_{GAS2} to the device constituting the controller 296 may be performed on-site where the second gas processing system 120 is to be installed, or not on-site but at a factory or the like.

The device constituting the controller 198 and the device constituting the controller 298 may be physically different from each other. Even in this case, the transmission of the software S_{FC2} to the device constituting the controller 298 brings the controller 298 into a state in which the controller 298 is capable of executing the software S_{FC2}. The device constituting the controller 198 is then physically replaced with the device constituting the controller 298. Such an update can also be performed. In this case, the transmission of the software S_{FC2} to the device constituting the controller 298 may be performed on-site where the second gas processing system 120 is to be installed, or not on-site but at a factory or the like.

There can be a case where the update from the controller 198 to the controller 298 is not performed. That is, the second gas processing system 210 can include the controller 198 instead of the controller 298.

The fuel cell 190 may be a solid oxide fuel cell (SOFC).

The supply source of the hydrocarbon-containing gas 101 is not limited to the infrastructure 500. The supply source may be a tank. An example of the tank is an LPG (liquefied petroleum gas) tank. In the present description, no distinction is made between a tank and a cylinder. Unless otherwise inconsistent, the "infrastructure 500" in the description of the example in FIG. 1 can be read as the "supply source" or the "tank".

The supply source of the hydrogen gas 201 is not limited to the infrastructure 600. The supply source may be a tank. Unless otherwise inconsistent, the "infrastructure 600" in the description of the example in FIGS. 2 and 3 can be read as the "supply source" or the "tank".

In the examples in FIGS. 1 to 3, the fuel cell 190 is employed as a hydrogen utilizing device. However, the hydrogen utilizing device is not limited to the fuel cell 190. Another example of the hydrogen utilizing device is a hydrogen engine. Unless otherwise inconsistent, the "fuel cell 190" in the description of the examples in FIGS. 1 to 3 can be read as the "hydrogen utilizing device" or the "hydrogen engine".

### (Supplementary Note)

The following techniques are disclosed by the present disclosure.

### (Technique 1)

A gas processing system including:
a gas processing unit including a reformer, the gas processing unit being configured to be supplied with hydrogen gas and being capable of performing at least one process for adjusting a component of the hydrogen gas; and
a controller configured to set whether to cause the gas processing unit to perform the at least one process.

### (Technique 2)

The gas processing system according to Technique 1, wherein
the at least one process includes at least one selected from the group consisting of:
(a) a process of desulfurizing the hydrogen gas;
(b) a process of selectively oxidizing the hydrogen gas; and
(c) a process of humidifying the hydrogen gas.

### (Technique 3)

The gas processing system according to Technique 1 or 2, wherein
the gas processing unit includes:
   a desulfurizer configured to perform hydrodesulfurization of the hydrogen gas; and
   a heater configured to heat the desulfurizer, and
the at least one process includes a process of heating the desulfurizer by the heater, the process being such that the hydrodesulfurization is performed.

### (Technique 4)

The gas processing system according to Technique 3, wherein
the heater includes a combustor configured to heat the desulfurizer, and
the gas processing unit includes an air supply device configured to supply air to the combustor.

### (Technique 5)

The gas processing system according to Technique 3 or 4, wherein
the heater includes an electric heater configured to heat the desulfurizer.

### (Technique 6)

The gas processing system according to any one of Techniques 1 to 5, wherein
the gas processing unit includes:
   a selective oxidizer configured to perform selective oxidation of the hydrogen gas; and
   an air supply device configured to supply air to the selective oxidizer, and
the at least one process includes a process of supplying the air to the selective oxidizer by the air supply device, the process being such that the selective oxidation is performed by the selective oxidizer.

### (Technique 7)

The gas processing system according to any one of Techniques 1 to 6, wherein
the gas processing unit includes a water supply device configured to supply water to be used for humidification of the hydrogen gas, and
the at least one process includes a process of supplying the water by the water supply device, the process being such that the humidification is performed.

### (Technique 8)

The gas processing system according to any one of Techniques 1 to 7, wherein
the gas processing unit includes:
   a water supply device configured to supply water to be used for humidification of the hydrogen gas; and
   a heater configured to heat the water while the water is being supplied by the water supply device, and
the at least one process includes a process of heating, by the heater, the water while the water is being supplied by the water supply device, the process being such that the humidification is performed.

### (Technique 9)

The gas processing system according to any one of Techniques 1 to 8, wherein
the hydrogen gas is pure hydrogen gas.

### (Technique 10)

The gas processing system according to any one of Techniques 1 to 9, wherein
(x) carbon is deposited on a reforming catalyst of the reformer, and/or
(y) the controller includes a memory, and the memory records information indicating that a cumulative usage time of the reformer in reforming a hydrocarbon-containing gas is greater than zero.

### (Technique 11)

A fuel cell system including:
the gas processing system according to any one of Techniques 1 to 10; and
a fuel cell configured to generate power using the hydrogen gas output from the gas processing system.

### (Technique 12)

The fuel cell system according to Technique 11, wherein
the fuel cell system is configured:
   in a first case, to permit the fuel cell to generate power; and
   in a second case, to prohibit the fuel cell from generating power and/or to notify of an abnormality, and
a concentration of hydrogen in a supply gas supplied to the gas processing unit is higher in the first case than in the second case, and a concentration of hydrocarbon in the supply gas is lower in the first case than in the second case.

### (Technique 13)

An operating method for a gas processing system including a gas processing unit, the gas processing unit including a reformer, the operating method including:
supplying hydrogen gas to the gas processing unit; and
setting whether to cause the gas processing unit to perform at least one process for adjusting a component of the hydrogen gas.

### (Technique 14A)

A manufacturing method for manufacturing a second gas processing system by modifying a first gas processing system into the second gas processing system, wherein
the first gas processing system includes a first gas processing unit,
the first gas processing unit is configured to be supplied with a hydrocarbon-containing gas,
the first gas processing unit includes a reformer configured to produce a hydrogen-containing gas from the hydrocarbon-containing gas,
the second gas processing system includes a second gas processing unit and a controller,
the second gas processing unit is configured to be supplied with hydrogen gas,
the second gas processing unit is capable of performing at least one process for adjusting a component of the hydrogen gas using at least one device, the at least one device being transferred from the first gas processing unit to the second gas processing unit,
the controller is configured to set whether to cause the second gas processing unit to perform the at least one process, and
the manufacturing method includes installing software configured to enable the setting.

### (Technique 14B)

A manufacturing method for manufacturing the gas processing system according to any one of Techniques 1 to 10, wherein
assuming that
   a second gas processing system is the gas processing system, and
   a second gas processing unit is the gas processing unit,
the manufacturing method including modifying a first gas processing system into the second gas processing system, wherein
the first gas processing system includes a first gas processing unit,
the first gas processing unit is configured to be supplied with a hydrocarbon-containing gas,
the first gas processing unit includes the reformer configured to produce a hydrogen-containing gas from the hydrocarbon-containing gas,
the second gas processing unit is capable of performing the at least one process using at least one device, the at least one device being transferred from the first gas processing unit to the second gas processing unit, and
the manufacturing method includes installing software configured to enable the setting.

### (Technique 15)

The manufacturing method according to Technique 14A or 14B, wherein
the installing the software includes receiving, by a device constituting the controller, the software.

### INDUSTRIAL APPLICABILITY

According to the technique according to the present disclosure, a gas processing system having a hydrocarbon-containing gas specification, which has conventionally been widespread, can be rationally updated to a gas processing system having a hydrogen gas specification. For example, in Germany, pursuant to the Building Energy Act (GEG), the installation of oil heating systems and coal heating systems in new and existing buildings will, in principle, be prohibited from 2026 onward. However, hydrogen-ready (H2-ready) equipment can continue to be installed even after 2026. The technique according to the present disclosure can achieve hydrogen-ready appliances. Here, the term "hydrogen-ready equipment" refers to equipment that remains usable even with a transition to a situation in which hydrogen gas is supplied.

## Claims

1. A gas processing system (210) comprising:
a gas processing unit (211) comprising a reformer (150), the gas processing unit (211) being configured to be supplied with hydrogen gas (201) and being capable of performing at least one process for adjusting a component of the hydrogen gas (201); and
a controller (296) configured to set whether to cause the gas processing unit (211) to perform the at least one process.

2. The gas processing system (210) according to claim 1, wherein
the at least one process comprises at least one selected from the group consisting of:
(a) a process of desulfurizing the hydrogen gas (201);
(b) a process of selectively oxidizing the hydrogen gas (201); and
(c) a process of humidifying the hydrogen gas (201).

3. The gas processing system (210) according to claim 1 or 2, wherein
the gas processing unit (211) comprises:
a desulfurizer (122) configured to perform hydrodesulfurization of the hydrogen gas (201); and
a heater (230) configured to heat the desulfurizer (122), and
the at least one process comprises a process of heating the desulfurizer (122) by the heater (230), the process being such that the hydrodesulfurization is performed.

4. The gas processing system (210) according to claim 3, wherein
the heater (230) comprises a combustor (131) configured to heat the desulfurizer (122), and
the gas processing unit (211) comprises an air supply device configured to supply air (104) to the combustor (131).

5. The gas processing system (210) according to claim 3 or 4, wherein
the heater (230) comprises an electric heater (132) configured to heat the desulfurizer (122).

6. The gas processing system (210) according to any one of claims 1 to 5, wherein
the gas processing unit (211) comprises:
a selective oxidizer (140) configured to perform selective oxidation of the hydrogen gas (201); and
an air supply device configured to supply air (102) to the selective oxidizer (140), and
the at least one process comprises a process of supplying the air (102) to the selective oxidizer (140) by the air supply device, the process being such that the selective oxidation is performed by the selective oxidizer (140).

7. The gas processing system (210) according to any one of claims 1 to 6, wherein
the gas processing unit (211) comprises a water supply device configured to supply water (103) to be used for humidification of the hydrogen gas (201), and
the at least one process comprises a process of supplying the water (103) by the water supply device, the process being such that the humidification is performed.

8. The gas processing system (210) according to any one of claims 1 to 7, wherein
the gas processing unit (211) comprises:
a water supply device configured to supply water (103) to be used for humidification of the hydrogen gas (201); and
a heater (230) configured to heat the water (103) while the water (103) is being supplied by the water supply device, and
the at least one process comprises a process of heating, by the heater (230), the water (103) while the water (103) is being supplied by the water supply device, the process being such that the humidification is performed.

9. The gas processing system (210) according to any one of claims 1 to 8, wherein
the hydrogen gas (201) is pure hydrogen gas.

10. The gas processing system (210) according to any one of claims 1 to 9, wherein
(x) carbon is deposited on a reforming catalyst of the reformer (150), and/or
(y) the controller (296) comprises a memory, and the memory records information indicating that a cumulative usage time of the reformer (150) in reforming a hydrocarbon-containing gas (101) is greater than zero.

11. A fuel cell system (200) comprising:
the gas processing system (210) according to any one of claims 1 to 10; and
a fuel cell (190) configured to generate power using the hydrogen gas (201) output from the gas processing system (210).

12. The fuel cell system (200) according to claim 11, wherein
the fuel cell system (200) is configured:
in a first case, to permit the fuel cell (190) to generate power; and
in a second case, to prohibit the fuel cell (190) from generating power and/or to notify of an abnormality, and
a concentration of hydrogen in a supply gas supplied to the gas processing unit (211) is higher in the first case than in the second case, and a concentration of hydrocarbon in the supply gas is lower in the first case than in the second case.

13. An operating method for a gas processing system (210) comprising a gas processing unit (211), the gas processing unit (211) comprising a reformer (150), the operating method comprising:
supplying hydrogen gas (201) to the gas processing unit (211); and
setting whether to cause the gas processing unit (211) to perform at least one process for adjusting a component of the hydrogen gas (201).

14. A manufacturing method for manufacturing a second gas processing system (210) by modifying a first gas processing system (110) into the second gas processing system (210), wherein
the first gas processing system (110) comprises a first gas processing unit (111),
the first gas processing unit (111) is configured to be supplied with a hydrocarbon-containing gas (101),
the first gas processing unit (111) comprises a reformer (150) configured to produce a hydrogen-containing gas (105) from the hydrocarbon-containing gas (101),
the second gas processing system (210) comprises a second gas processing unit (211) and a controller (296),
the second gas processing unit (211) is configured to be supplied with hydrogen gas (201),
the second gas processing unit (211) is capable of performing at least one process for adjusting a component of the hydrogen gas (201) using at least one device, the at least one device being transferred from the first gas processing unit (111) to the second gas processing unit (211),
the controller (296) is configured to set whether to cause the second gas processing unit (211) to perform the at least one process, and
the manufacturing method comprises installing software (S_{GAS2}) configured to enable the setting.

15. The manufacturing method according to claim 14, wherein
the installing the software (S_{GAS2}) comprises receiving, by a device constituting the controller (296), the software (S_{GAS2}).
